# EUROPEAN PATENT APPLICATION

(11) **EP 4 298 901 A1**
(43) Date of publication of application: **03.01.2024**
(21) Application number: 22780775.7
(22) Date of filing: 28.03.2022
(51) Int. Cl.: A01K 43/00, B07C 5/18, G01G 11/00

(54) **CHICKEN EGG SORTING DEVICE, AND METHOD OF USING INFORMATION OBTAINABLE FROM WEIGHING UNIT**

(30) Priority: 29.03.2021 JP 2021054495
(71) Applicant: Nabel Co., Ltd., Kyoto-shi, Kyoto 601-8444 (JP)
(72) Inventor: NAMBU, Kunio, Kyoto-shi, Kyoto 601-8444 (JP)
(74) Representative: Prüfer & Partner mbB Patentanwälte · Rechtsanwälte
(86) International application number: PCT/JP2022/015074
(87) International publication number: WO 2022/210564

(57) **Abstract**

A chicken egg sorter (1) of the present invention includes a measuring unit (7), an egg conveyor (2), a triggering unit (8), and an anomaly detector (9). The measuring unit (7) measures the weight of each of chicken eggs (E) placed one by one on the measuring unit. The egg conveyor (2) conveys chicken eggs to and from the measuring unit (7). The triggering unit (8) indicates a measurement timing at which the chicken egg weight is to be obtained from the measuring unit (7). The anomaly detector (9) detects an anomaly of at least one of a mechanical part of the measuring unit (7) and a mechanical part of the egg conveyor (2), based on information, collected from the measuring unit 7, about the chicken egg weight at timings other than the measurement timing. A method for utilizing information available from the measuring unit (7) includes collecting, from the measuring unit (7) mounted on the sorter (1) for chicken eggs (E), information about chicken egg weight at timings other than a measurement timing, and using the information for normal-operation monitoring of at least one of a mechanical part of the measuring unit (7) and a mechanical part of the sorter (1).

## Description

### TECHNICAL FIELD

The present invention relates to a chicken egg sorter, and a method for utilizing information available from a measuring unit mounted on the chicken egg sorter.

### BACKGROUND ART

A measuring unit that measures the weight of chicken eggs one by one is known (see below-referenced PTL 1, for example). A chicken egg weight sorter that sorts chicken eggs based on the measured weight uses a measuring unit provided on an egg conveyor to measure the weight of chicken eggs. A load cell, for example, is used for the measuring unit, and a top tray of the measuring unit is fixed. The egg conveyer successively positions chicken eggs, from the preceding step, one by one on the measuring unit. After measurement data is obtained for identifying the weight of the chicken egg, the chicken egg is removed from the measuring unit and fed to the subsequent step. While the chicken egg is fed to the subsequent step, another chicken egg from the preceding step is positioned on the measuring unit.

An egg to be positioned on the measuring unit rolls from the preceding step. Therefore, measurement data of the egg is determined somewhat later, based on the value of the measurement at around the time when the egg becomes stable on the measuring unit. Specifically, a triggering unit indicates the timing to obtain the measurement data.

Such measuring units usually measure a huge quantity of eggs every day. Malfunctions may therefore occur not only to the measuring unit, but also to peripheral devices, i.e., parts of the step preceding the measuring unit and parts of the step subsequent to the measuring unit, for example. Examples of the malfunctions include a malfunction resulting from foreign matter caught in any part, a malfunction resulting from deformation caused by abrasion of any part due to eggs, and a malfunction resulting from a part of the measuring unit caught in another location. Not only troubles in the measuring unit but also troubles occurring to the preceding step and/or the subsequent step of the measuring unit also result in a problem that the chicken egg weight cannot accurately be measured.

### CITATION LIST

### PATENT LITERATURE

PTL 1: Japanese Patent Laying-Open No. H09-150941

### SUMMARY OF INVENTION

### TECHNICAL PROBLEM

An object of the present invention is to utilize information available from the measuring unit to thereby contribute to preventive maintenance.

### SOLUTION TO PROBLEM

A chicken egg sorter according to the present invention includes a measuring unit, an egg conveyor, a triggering unit, and an anomaly detector. The measuring unit measures the weight of each of chicken eggs placed one by one on the measuring unit. The egg conveyor conveys chicken eggs to and from the measuring unit. The anomaly detector detects an anomaly of at least one of a mechanical part of the measuring unit and a mechanical part of the egg conveyor, based on information about the chicken egg weight collected from the measuring unit.

A method for utilizing information available from a measuring unit includes collecting, from the measuring unit mounted on a sorter for chicken eggs, information about chicken egg weight at timings other than a measurement timing, and using the information for normal-operation monitoring of at least one of a mechanical part of the measuring unit and a mechanical part of the sorter.

### ADVANTAGEOUS EFFECTS OF INVENTION

The present invention enables utilization of information available from the measuring unit to thereby make contribution to preventive maintenance.

The foregoing and other objects, features, aspects and advantages of the present invention will become apparent from the following detailed description of the present invention when taken in conjunction with the accompanying drawings.

### BRIEF DESCRIPTION OF DRAWINGS

Fig. 1 is a diagram showing a measuring unit and its surrounding of a chicken egg sorter according to one embodiment of the present invention.
Fig. 2 is a diagram showing the measuring unit and its surrounding of the chicken egg sorter according to the embodiment.
Fig. 3 is an example in which information available from the measuring unit is represented by a waveform.
Fig. 4 is another example in which information available from the measuring unit is represented by a waveform.
Fig. 5 is a diagram showing a modification of the chicken egg sorter.
Fig. 6 is a diagram showing another modification of the chicken egg sorter.
Fig. 7 is a flowchart for an anomaly detection process.

### DESCRIPTION OF EMBODIMENTS

In the following, a method for utilizing information available from a measuring unit 7 according to the present embodiment relates to measuring unit 7 that is mounted on a sorter 1 for chicken eggs E.

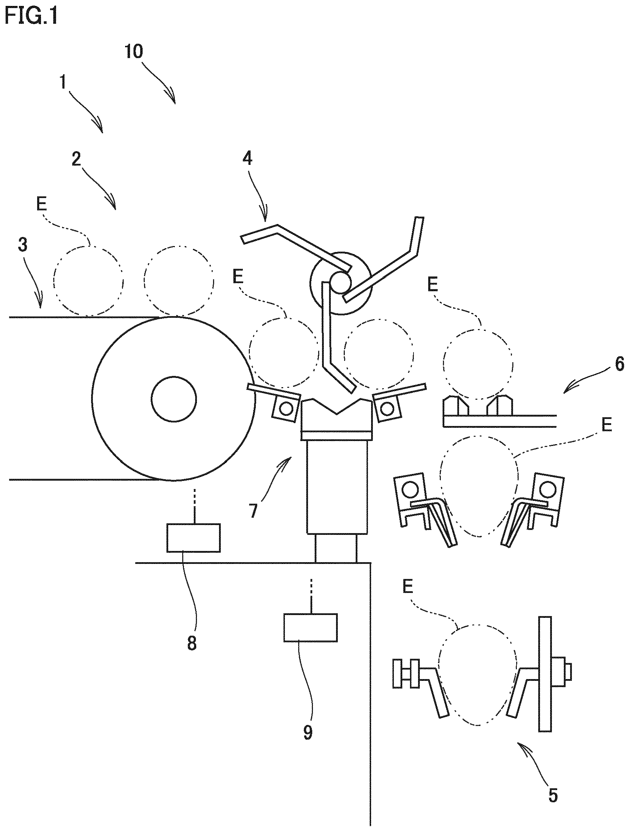

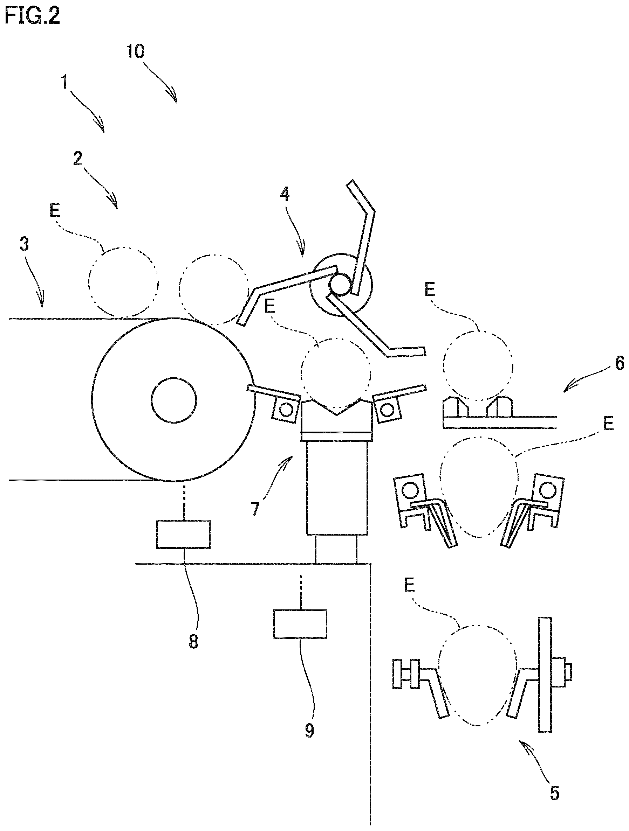

Figs. 1 and 2 are diagrams showing an example of sorter 1. Sorter 1 for chicken eggs E includes an egg conveyor 2 and measuring unit 7. Egg conveyor 2 of the present embodiment includes a first egg conveyor 3, a second egg conveyor 4, and a third egg conveyor 5. A posture changer 6 is disposed between second egg conveyor 4 and third egg conveyor 5.

First egg conveyor 3 is formed by a plurality of rollers (not shown), for example. The rollers are made from resin, and are gradually worn down due to contact with egg shells that has occurred many times. First egg conveyor 3 conveys egg E while holding the egg horizontally. Egg E is moved on a roller while being held between two rollers adjacent to each other. First egg conveyor 3 is a feeder that feeds chicken eggs E to measuring unit 7.

Second egg conveyor 4 is formed by a rotating element in the form of an impeller, for example. Second egg conveyor 4 is located above measuring unit 7. Second egg conveyor 4 successively positions chicken eggs E, from the preceding step, one by one on measuring unit 7. Second egg conveyor 4 obtains measurement data for identifying the weight of the chicken egg E, thereafter removes the chicken egg E from measuring unit 7, and feeds the chicken egg to the subsequent step. While doing so, second egg conveyor 4 positions another chicken egg E on measuring unit 7. Namely, second egg conveyor 4 uses the impeller so as to prevent two chicken eggs E from being placed on measuring unit 7 at the same time.

Posture changer 6 changes chicken egg E from the horizontal posture into the vertical posture. Egg E changed into the vertical posture is released toward third egg conveyor 5.

Third egg conveyor 5 is formed by a plurality of buckets, for example. Third egg conveyor 5 conveys chicken egg E while holding the chicken egg vertically.

Third egg conveyor 5 is a distribution conveyor for distributing chicken eggs based on the result of measurement of the chicken egg weight.

A load cell, for example, is used for measuring unit 7, and a top tray of the measuring unit is fixed. The top tray is made from resin, and is gradually worn down due to contact with egg shells that has occurred many times. Measuring unit 7 is disposed in such a manner that the top surface of the top tray is lower than the top surface of first egg conveyor 3. Specifically, chicken egg E fed from first egg conveyor 3 rolls downward onto measuring unit 7 while the timing for chicken egg E to move onto measuring unit 7 is adjusted at second egg conveyor 4. Measuring unit 7 measures the weight of chicken eggs E placed one by one on the measuring unit.

First egg conveyor 3 includes a triggering unit 8. Triggering unit 8 is a sensor (encoder) capable of detecting the distance over which the roller has moved, i.e., the distance over which chicken egg E placed on the roller has moved, for example. Triggering unit 8 specifies a timing to obtain measurement data (hereinafter referred to as "measurement timing"), based on a count value of a clock signal. At the measurement timing, second egg conveyor 4 has not been brought into contact with chicken egg E. Various methods for detecting the distance over which chicken egg E has moved, as is known in the art, can be applied for use as triggering unit 8.

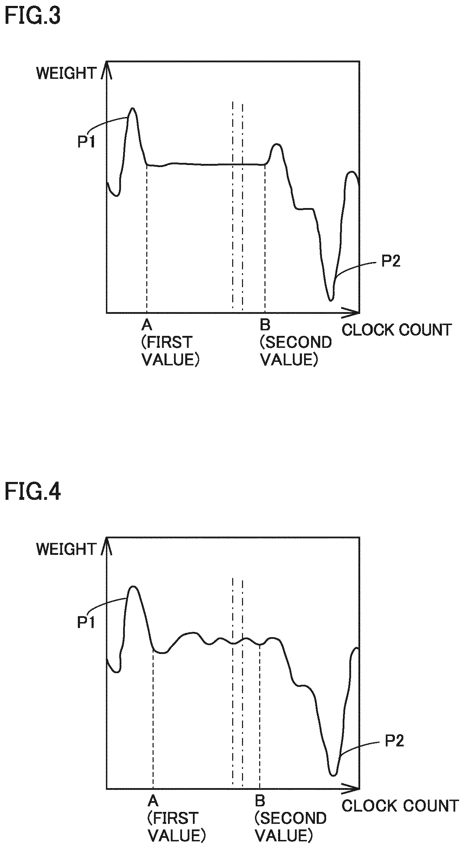

Figs. 3 and 4 are diagrams each showing a waveform of an output signal of measuring unit 7. The measurement timing is located between two dash-dot-dash lines in each drawing. In each of the waveforms in Figs. 3 and 4, an initial sharp and large peak is identified before the measurement timing. This is for the reason that when a chicken egg is moved onto a tray of measuring unit 7, the momentum of the movement causes the measurement to be larger than the actual chicken egg weight, and subsequently the measurement indicates a smaller value than the actual value due to action against the momentum. After this, the measurement indicates its value that becomes stable with time. Usually, in a stable state in which the measurement value is stable, the measurement timing is reached. When chicken egg E is discharged from measuring unit 7 as well, its momentum causes peaks in the waveform.

Conventionally, measurement values other than the measurement value at the measurement timing are not utilized at all. Measuring unit 7 takes measurement values at timings other than the measurement timing. Even in idle operation in which no chicken egg E is placed on measuring unit 7, vibrations of machines/devices, for example, affect measuring unit 7 and are reflected on a waveform that is output from measuring unit 7.

A method for utilizing information available from measuring unit 7 may be implemented by an anomaly detector 9 in the present embodiment. Anomaly detector 9 detects an anomaly of measuring unit 7 and/or devices around measuring unit 7 that include egg conveyor 2, based on information other than measurement data obtained from measuring unit 7. Anomaly detector 9 collects, from measuring unit 7, information at timings other than the measurement timing of the chicken egg weight, and uses the information for normal-operation monitoring of at least one of a mechanical part of measuring unit 7 and a mechanical part of sorter 1.

Anomaly detector 9 is made up of special-purpose or general-purpose computers such as a CPU (Central Processing Unit), an internal memory, an input/output interface, and an AD (Analog Digital) converter. In accordance with a program stored in the internal memory, the CPU and other peripheral devices cooperate with each other to thereby function as anomaly detector 9. A notifying unit (not shown) may be included that makes a notification, on a display (not shown), of an anomaly detected by anomaly detector 9 and, when the anomaly is detected by processing by anomaly detector 9, a notification of the detected anomaly and/or details of the anomaly may be given on a display or the like

Regarding this anomaly detector 9, when a waveform as shown in Fig. 4 is obtained from measuring unit 7, for example, it is presumed, from measurement values at timings before and after the measurement timing, that chicken egg E may have been moved irregularly onto the tray of measuring unit 7 due to some reasons, based on whether the measurement values have a stable state or not, and/or based on the magnitude of the peak when the egg is moved onto the tray and the magnitude of the peak when the egg is discharged from the tray, for example. The reasons are presumed to be a trouble in a mechanical part of measuring unit 7, a trouble in an electrical system, or a trouble in a mechanical part of sorter 1. The trouble in the mechanical part of measuring unit 7 may specifically include wear of the tray of measuring unit 7, and deviation of the timing at which chicken egg E is moved onto measuring unit 7, and the like. The trouble in the mechanical part of sorter 1 may specifically include a trouble in a feeding mechanism (first egg conveyor 3 or second egg conveyor 4, for example) that feeds chicken egg E to measuring unit 7 or a discharging mechanism (second egg conveyor 4 or posture changer 6, for example) that discharges the egg from measuring unit 7, wear of rollers, distortion of a shaft, deviation of the transfer timing, and the like.

For example, when it is detected that either the mechanical part of measuring unit 7 or the mechanical part of egg conveyor 2 has gradually been worn down due to contact with shells of chicken eggs, it is indicated by a notifying unit that any of the mechanical parts "has been worn down" or the mechanical part "should be replaced." As these mechanical parts are gradually worn down, the measurement value at the measurement timing becomes less stable. Therefore, based on information about the chicken egg weight collected from measuring unit 7 during acceleration and/or deceleration of egg conveyor 2, for example, an anomaly can be detected.

As described above, chicken egg sorter 1 includes measuring unit 7, egg conveyor 2, triggering unit 8, and anomaly detector 9. Measuring unit 7 measures the weight of each of chicken eggs E placed one by one on the measuring unit. Egg conveyor 2 conveys chicken eggs E to and from measuring unit 7. Triggering unit 8 indicates a measurement timing at which the chicken egg weight is to be obtained from measuring unit 7. Anomaly detector 9 detects an anomaly of at least one of a mechanical part of measuring unit 7 and a mechanical part of egg conveyor 2, based on information, collected from measuring unit 7, about the chicken egg weight at timings other than the measurement timing. Thus, information other than the information about the weight used for determining the chicken egg weight can also be used for the purpose of predictive maintenance of egg conveyor 2 and measuring unit 7.

At least one of the mechanical part of measuring unit 7 and the mechanical part of egg conveyor 2 is made from resin, and anomaly detector 9 detects that at least one of the mechanical part of measuring unit 7 and the mechanical part of egg conveyor 2 has gradually been worn down due to contact with shell of chicken egg E. Further, it is preferable to include a notifying unit that makes a notification, on a display, of the anomaly detected by the anomaly detector.

A method for utilizing information available from measuring unit 7 according to the present embodiment includes collecting, from measuring unit 7 mounted on sorter 1 for chicken eggs E, information about chicken egg weight at timings other than a measurement timing, and using the information for normal-operation monitoring of at least one of a mechanical part of measuring unit 7 and a mechanical part of sorter 1. Thus, information other than the information about the weight used for determining the chicken egg weight can also be used for the purpose of predictive maintenance of egg conveyor 2 and measuring unit 7.

Chicken egg sorter 1 according to the present embodiment includes an information processing system 10 for measurement of chicken eggs, including measuring unit 7, egg conveyor 2, triggering unit 8, and anomaly detector 9. Measuring unit 7 measures the weight of each of chicken eggs E placed one by one on the measuring unit. Egg conveyor 2 successively positions chicken eggs E from the preceding step one by one on measuring unit 7, obtains measurement data for identifying the weight of the chicken egg E, then removes the chicken egg E from measuring unit 7, conveys the egg to the subsequent step, and positions another chicken egg E on measuring unit 7. Triggering unit 8 indicates a measurement timing at which measurement data is to be obtained. Based on information, other than the measurement data, available from measuring unit 7, anomaly detector 9 detects an anomaly of measuring unit 7 and/or devices around measuring unit 7 that include egg conveyor 2.

The present invention is not limited to the above-described embodiment.

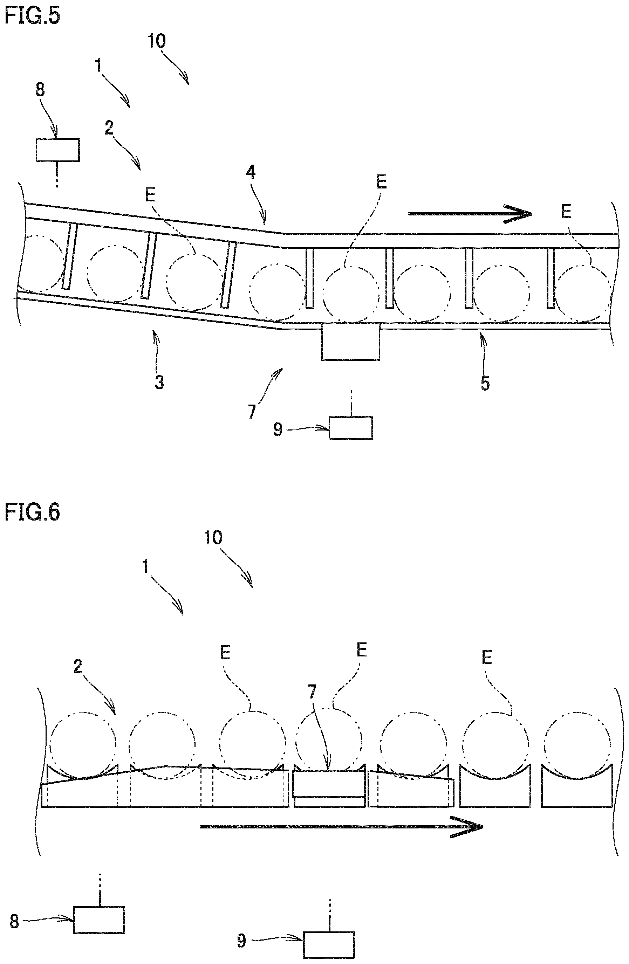

Sorter 1 for chicken eggs E is not limited to the above-described one. For example, as shown in Figs. 5 and 6, the sorter may not include the posture changer. Fig. 5 includes a rail-shaped first egg conveyor 3, a second egg conveyor 4 that supports and moves chicken eggs E, and a rail-shaped third egg conveyor 5. The arrow in the drawing indicates the direction in which second egg conveyor 4 moves. Measuring unit 7 is disposed between first egg conveyor 3 and third egg conveyor 5. In Fig. 6, a carrier (egg conveyor 2) holding chicken eggs E from the lower surface side moves successively, and measuring unit 7 is disposed that measures chicken egg E separated from egg conveyor 2 during its movement. The arrow in the drawing indicates the direction in which egg conveyor 2 moves. From the above described sorters as well, advantageous effects identical or equivalent to those of the above-described embodiment are obtained.

Anomaly detector 9 may detect an anomaly based on only the information, collected from measuring unit 7, about the chicken egg weight at timings other than the measurement timing, or may detect an anomaly based on the information about the chicken egg weight at the measurement timing as well as the information about the chicken egg weight at timings other than the measurement timing. In other words, anomaly detector 9 may be configured to detect an anomaly based on information about the chicken egg weight at timings including the measurement timing.

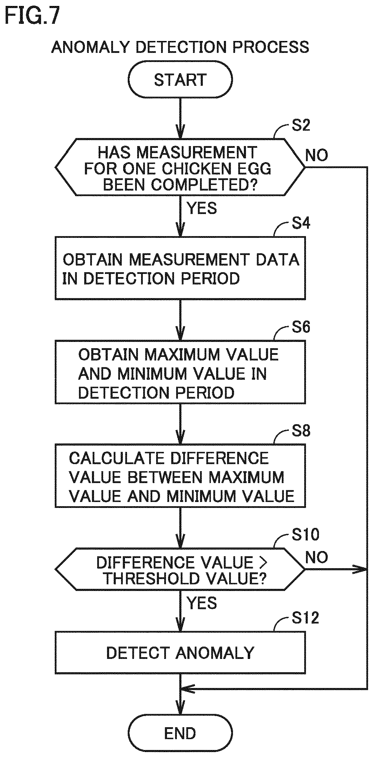

Fig. 7 is an example of a flowchart showing an anomaly detection process performed by anomaly detector 9. The process in Fig. 7 is performed at regular intervals (0.1 second, for example). In step S2, anomaly detector 9 determines whether or not measurement for one chicken egg has been completed. Here, as an example of how this determination is made, anomaly detector 9 determines whether or not a detection period has elapsed.

The detection period is a predetermined period. The detection period is a period for which the anomaly as described above is not detected and a condition continues that a difference value, which is described later herein, is less than a threshold value. The detection period is included in a placement period, which is a period from the time when one chicken egg is placed on measuring unit 7 (when peak P1 in Figs. 3 and 4 is detected, for example) to the time when the chicken egg is separated from measuring unit 7 (when inverse peak P2 in Figs. 3 and 4 is detected, for example). For example, the detection period, as shown in Figs. 3 and 4, is a period from a first timing A to a second timing B, when one chicken egg is placed on measuring unit 7. First timing A is a timing when the clock count (count value of a clock signal) from the time when one chicken egg is placed on measuring unit 7 reaches a predetermined first value. Second timing B is a timing when the clock count from the time when one chicken egg is placed on measuring unit 7 reaches a predetermined second value. The second value is larger than the first value.

As a modification, first timing A may be a timing when a first time (corresponding to the above-described first value) has elapsed since placement of one chicken egg on measuring unit 7. Second timing B may be a timing when a second time (corresponding to the above-described second value) has elapsed since placement of one chicken egg on measuring unit 7. The second time is longer than the first time.

In step S4, anomaly detector 9 obtains measurement data taken by measuring unit 7 for one chicken egg in the detection period. The measurement data in the detection period corresponds to "information about chicken egg weight" of the present disclosure. The measurement data is data indicative of a variation (trajectory) in time of a measurement value in the detection period.

Next, in step S6, anomaly detector 9 obtains, based on the measurement data obtained in step S4, a maximum value and a minimum value of the measurement value in the detection period. Next, in step S8, anomaly detector 9 calculates the difference value between the maximum value and the minimum value. The difference value is calculated by subtracting the minimum value from the maximum value, for example. Next, in step S10, anomaly detector 9 determines whether or not the difference value is larger than a threshold value. When the difference value is larger than the threshold value (YES in step S10), i.e., when the variation of the measurement value is the one as shown in Fig. 4, anomaly detector 9 detects an anomaly in step S12, and ends the anomaly detection process. In contrast, when the difference value is smaller than or equal to the threshold value (NO in step S10), i.e., when the variation of the measurement value is the one as shown in Fig. 3, anomaly detector 9 detects no anomaly and ends the anomaly detection process.

Thus, anomaly detector 9 detects an anomaly based on a variation of the measurement value (information about chicken egg weight) in the detection period. In the example in Fig. 7, anomaly detector 9 detects an anomaly based on the difference value between the maximum value and the minimum value in the detection period. Anomaly detector 9 may detect an anomaly by another method, based on the variation of the measurement value in the detection period. For example, when the measurement value in the detection period falls in a predetermined normal range, anomaly detector 9 detects no anomaly and determines that this is a normal state. In contrast, when the measurement value in the detection period is out of the normal range, anomaly detector 9 detects an anomaly.

It should be construed that the embodiments disclosed herein are given by way of illustration, not by way of limitation. It is intended that the scope of the present invention is defined by claims, not by the scope as described above, and encompasses all variations equivalent in meaning and scope to the claims.

### INDUSTRIAL APPLICABILITY

The present invention is applicable to a chicken egg sorter including a measuring unit.

### REFERENCE SIGNS LIST

1 sorter; 2 egg conveyor; 7 measuring unit; 8 triggering unit; 9 anomaly detector; E chicken egg

## Claims

1. A chicken egg sorter comprising:
a measuring unit that measures a weight of each of chicken eggs placed one by one on the measuring unit;
an egg conveyor that conveys chicken eggs to and from the measuring unit; and
an anomaly detector that detects an anomaly of at least one of a mechanical part of the measuring unit and a mechanical part of the egg conveyor, based on information about chicken egg weight collected from the measuring unit.

2. The egg sorter according to claim 1, wherein
at least one of the mechanical part of the measuring unit and the mechanical part of the egg conveyor is made from resin, and
the anomaly detector detects that at least one of the mechanical part of the measuring unit and the mechanical part of the egg conveyor has gradually been worn down due to contact with chicken egg shell.

3. The egg sorter according to claim 1 or 2, further comprising a notifying unit that makes a notification, on a display, of the anomaly detected by the anomaly detector.

4. The egg sorter according to any one of claims 1 to 3, further comprising a triggering unit that indicates a measurement timing at which a chicken egg weight is to be obtained from the measuring unit, wherein
the anomaly detector detects the anomaly based on the information about chicken egg weight at timings other than the measurement timing.

5. A method for utilizing information available from a measuring unit mounted on a chicken egg sorter, the method including:
collecting, from the measuring unit, information about chicken egg weight at timings other than a measurement timing; and
using the information for normal-operation monitoring of at least one of a mechanical part of the measuring unit and a mechanical part of the chicken egg sorter.
